# EUROPEAN PATENT APPLICATION

(11) **EP 1 703 440 A2**
(43) Date of publication of application: **20.09.2006**
(21) Application number: 06111132.4
(22) Date of filing: 14.03.2006
(51) Int. Cl.: G06K 9/00

(54) **Face authentication apparatus, contrl method and program, electronic device having the same, and program recording medium**

(30) Priority: 15.03.2005 JP 2005074078
(71) Applicant: OMRON CORPORATION, Kyoto-shi, Kyoto 600-8530 (JP)
(72) Inventor: Inoue, Tomohiro, c/o OMRON Corporation, Shimogyo-ku,Kyoto,Kyoto 600-8530 (JP); Senga, Masahiro, c/o OMRON Corporation, Shimogyo-ku,Kyoto,Kyoto 600-8530 (JP)
(74) Representative: Weihs, Bruno Konrad

(57) **Abstract**

A mobile phone includes a photograph section that takes a picture of an object to be authenticated; a face-image comparison section that compares the face image taken by the photograph section with a registered face image; and a distance sensor and a distance determination section that measure the distance to the object's face. When the photograph section takes a picture of an object to be authenticated, the distance determination section measures the distance to the object's face using the distance sensor. Then a 3D-or-2D determination section authenticates the object's face from the measured distance. When the object's face is false, an authentication-result output section outputs authentication failure.

## Description

### BACKGROUND OF THE INVENTION

### 1. Field of the Invention

The present invention relates to face authentication apparatuses, methods and programs of controlling the same, electronic devices having the apparatus, and recording media in which the programs are recorded.

### 2. Description of the Related Art

Known authentication techniques for authenticating personal identification includes a face authentication technique in which a picture of the face of a person being authenticated is taken, and the photographed face image and a registered face image of the person are compared to thereby authenticate personal identification. The face authentication technique needs to prevent socalled "spoofing-with-picture", or impersonating an authorized user using a facial picture of the authorized user. The facial picture of an authorized user may be either photographic paper on which a photographed image of the user is printed or a display on which a photographed image is displayed.

In view of the problems, Patent Document 1: JP-A- 2004-362079 (disclosed on Dec. 24, 2004) discloses a face autheritication technique in which pictures of a user are taken at multiple angles to form authenticating-time user images; three-dimensional information of the user to be used in authentication is stored in advance; authenticating-time three-dimensional information on the user is generated using the multiple authenticating-time user images and the photographic angles of the multiple user images; and the authenticating-time three-dimensional information on the user is compared with the three-dimensional information of the user himself, thereby allowing authentication of personal identification. Patent Document 2: JP-A-2000-30066 (disclosed on Jan. 28, 2000) and Patent Document 3: JP-A-2003-263639 (disclosed on Sep. 19, 2003) also disclose face authentication techniques.

However, with the structure of Patent Document 1, the three-dimensional information of a user's face needs to be stored in advance, thus increasing the amount of information to be stored. Also, picture-taking must be performed multiple times, consuming much time and labor.

### SUMMARY OF THE INVENTION

It is an advantage of the present invention to provide a face authentication apparatus that can easily detect spoofing-with-picture.

A face authentication apparatus according to a first aspect of the invention includes: a face-image comparison section that compares the face image of an object to be authenticated with a registered face image; a distance acquisition section that measures the distance from a specified position to the object's face; and an object authentication section that authenticates the object's face on the basis of the distance measured by the distance acquisition section.

Examples of the specified position include the position of a distance sensor that measures the distance and the position of a camera that takes a picture of an object's face.

Furthermore, real faces have unevenness because they are three-dimensional, so that multiple measurement points on the faces are not present on the same plane. On the other hand, facial pictures are flat, so that multiple measurement points on the object's face are present on the same plane. Accordingly, if multiple measurement points on the object's face are present on the same plane, it can be determined to be spoofing-with-picture.

Facial pictures are generally smaller than real faces. Accordingly, in order to make the dimension of the face image obtained by photographing a facial picture approximately equal to that of a face image of a real face, the facial picture need to be brought close to the photograph section. Accordingly, if the distance to the object's face is different from a distance registered in advance, it is determined to be spoofing-with-picture.

Thus, with the above configuration, the distances to an object's face can be measured before face images are compared, and the object's face can be authenticated on the basis of the measured distances and as such, spoofing-with-picture can easily be detected.

The distance acquisition section may measure the distances from a plurality of positions to a plurality of measurement points on the object's face; and the object authentication section may determine whether the plurality of distances measured by the distance acquisition section are substantially the same, and when the distances are substantially the same, may determine that the object's face is false.

In this case, the distances from multiple positions to multiple measurement points on the object's face are measured before face images are compared and as such, spoofing-with-picture can easily be detected. Examples of the multiple positions include the positions of multiple distance sensors.

The distance acquisition section may measure the distances and angles from a plurality of positions to a plurality of measurement points on the object's face; and the object authentication section may specify the plurality of measurement points on the basis of the plurality of distances and angles measured by the distance acquisition section, may determine whether the specified plurality of points are present on the same plane, and when the points are present on the same plane, may determine that the object's face is false.

In this case, the distances and angles from multiple positions to multiple measurement points on the object's face are measured before face images are compared and as such, spoofing-with-picture can easily be detected. Also when a scanning distance measurement section is used, the distances and angles from a specified position to multiple measurement points can be measured by repeating the measurement of the distance at different angles. This can decrease the number of necessary distance measurement sections. It is preferable that the measurement points be three or more to determine whether the measurement points are present on the same plane.

The face image of the object to be authenticated and the distance from a specified position to the object's face may be registered in advance; and the object authentication section may determine whether the distance measured by the distance acquisition section and the registered distance are substantially the same, and when the distances are not substantially the same, may determine that the object's face is false.

In this case, the distance from a specified position to an object's face is measured before face images are compared. Accordingly, spoofing-with-picture can easily be detected. Moreover, since it is enough to measure the distance only one time, spoofing-with-picture can be detected more easily than that with the above configuration.

According to a second aspect of the invention, an electronic device includes: the face authentication apparatus according to one of Claims 1 to 4; a photograph section that takes a picture of an object to be authenticated, and forms a face image of the object; and a distance measurement section that measures the distance from a specified position to the object's face.

With the above configuration, the distance sensor senses the distance from a specified position to the object's face; the distance acquisition section acquires the distance; and the object authentication section can authenticate the object's face on the basis on the measured distance before the face-image comparison section compares the face image of the object photographed by the photograph section with a registered face image. Thus spoofing-with-picture can easily be detected. Accordingly, the electronic device according to an embodiment of the invention can offer the same advantages as those of the display device.

According to a third aspect of the invention, a method of controlling a face authentication apparatus includes: performing face authentication using a face-image comparison section that compares the face image of an object to be authenticated with a registered face image; measuring the distance from a specified position to the object's face; and authenticating the object's face on the basis of the measured distance.

With the method, the distance from a specified position to the object's face is measured and the object's face can be authenticated on the basis on the measured distance before the face images are compared. Thus spoofing-with-picture can easily be detected.

The components of the face authentication apparatus may be executed on a computer using a program for controlling the operation of the face authentication apparatus. The face-authentication-apparatus control program may be executed on any computers with computer-readable recording medium in which the face-authentication-apparatus control program is recorded.

In this way, the face authentication apparatus according to embodiments of the invention measures the distance from a specified position to an object's face, authenticates the object's face on the basis on the measured distance before comparing the face images. Thus spoofing-with-picture can easily be detected.

### BRIEF DESCRIPTION OF THE DRAWINGS

Fig. 1 is a flowchart showing the operation of face authentication of a mobile phone according to a first embodiment of the invention;
Fig. 2 is a front view showing the appearance of the mobile phone;
Fig. 3 is a block diagram showing the schematic configuration of the mobile phone;
Fig. 4 is a block diagram showing the schematic configuration of a face authentication section of the mobile phone;
Fig. 5A is a diagram showing the distances from distance sensors of the mobile phone to solid object;
Fig. 5B is a diagram showing the distances from the distance sensors to flat object;
Fig. 6 is a flowchart showing the operation of face authentication of a mobile phone according to a second embodiment of the invention;
Fig. 7A is a diagram showing a method of measuring the distances from a distance sensor of the mobile phone to the face of solid object; and
Fig. 7B is a diagram showing a method of measuring the distances from the distance sensor to the face of flat object

### DESCRIPTION OF THE PREFERRED EMBODIMENT

### First Embodiment

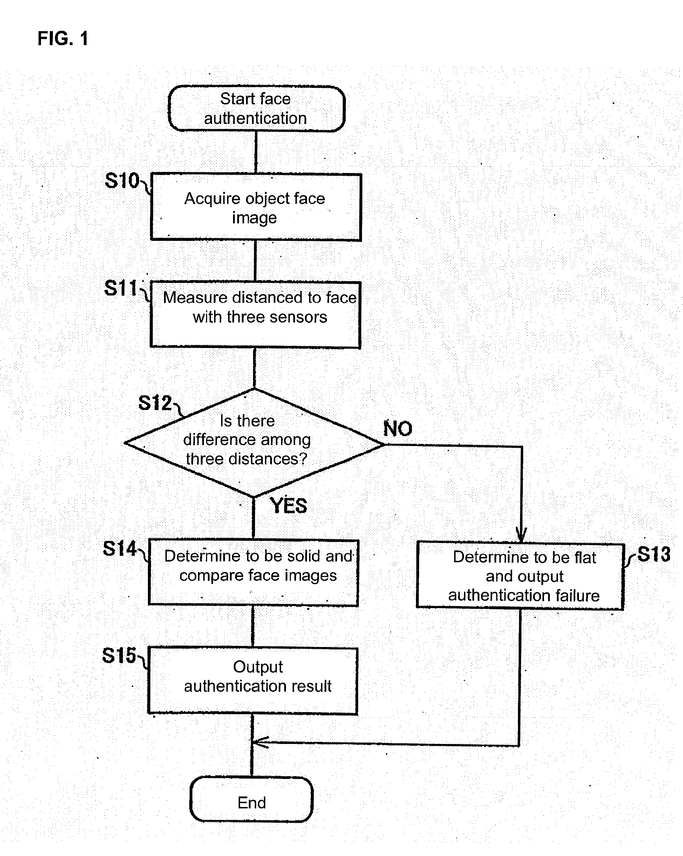

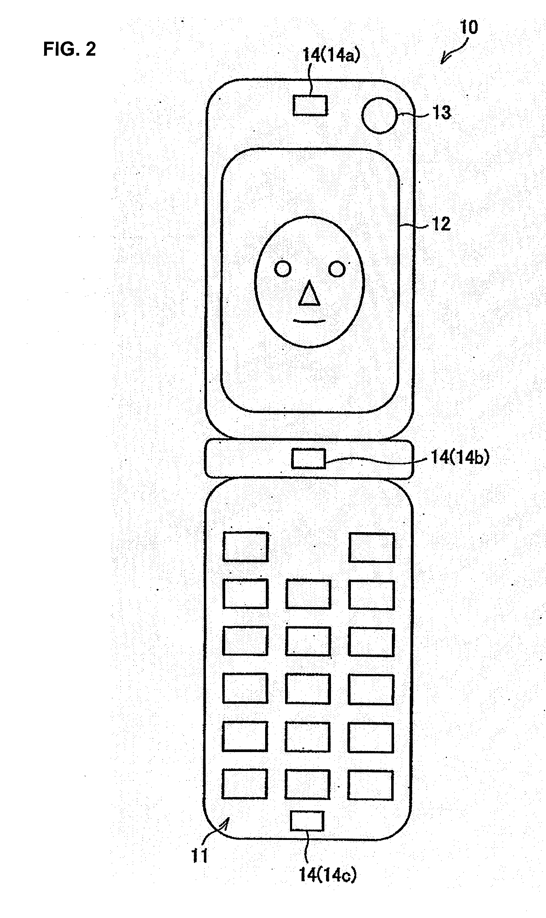

A first embodiment of the invention will be described hereinbelow with reference to Figs. 1 to 5. Fig. 2 shows the appearance of a mobile phone according to the first embodiment. The mobile phone (electronic device) 10 includes an operating section 11 that receives the operation of a user, a display section 12 that displays various information, and a photograph section 13 that takes a picture of an object including a user on the main surface.

According to this embodiment, the mobile phone 10 has multiple distance sensors (distance measurement sections) 14 for measuring the distances from an object at positions on the main surface. In the case of Fig. 2, three distance sensors 14a to 14c are disposed in the upper center, center, and lower center of the main surface of the mobile phone 10, respectively.

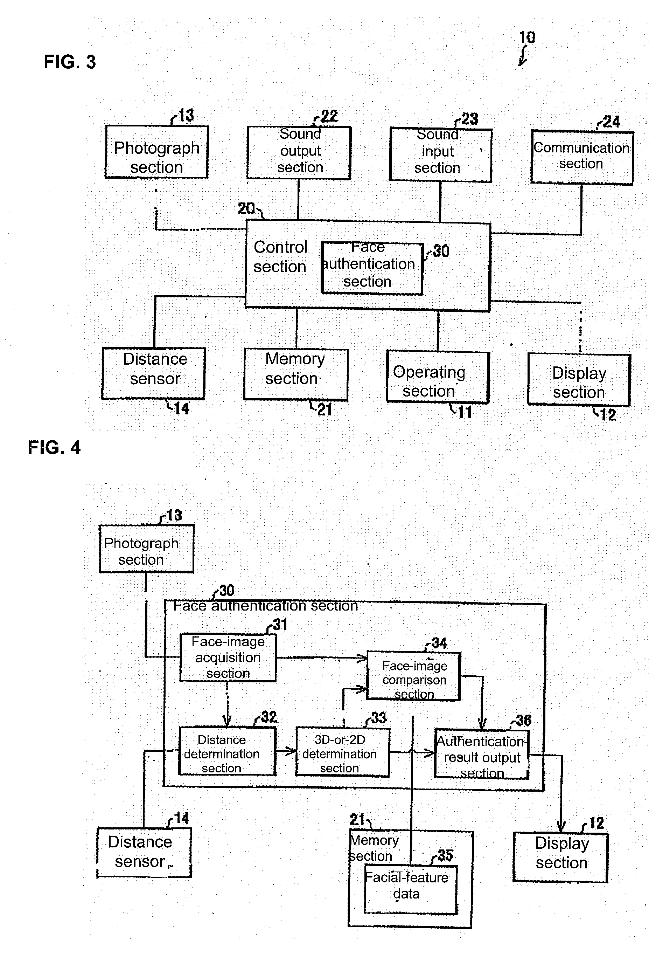

Fig. 3 shows the schematic configuration of the mobile phone 10. The mobile phone 10 includes the operating section 11, the display section 12, the photograph section 13, the distance sensor 14, a control section 20, a memory section 21, a sound output section 22, a sound input section 23, and a communication section 24.

The operating section 11 receives various inputs from the user, and includes input buttons, a keyboard, a ten-key pad, pointing devices such as a mouse, a touch panel, or another input device. The operating section 11 converts information input from the user to operation data, and sends the data to the control section 20.

The display section 12 includes a display device such as a cold-cathode tube (CRT), a liquid crystal display (LCD), or a plasma display. The display section 12 displays various information such as characters and images on the basis of the display data received from the control section 20.

The photograph section 13 includes a built-in digital camera including a lens group, a diaphragm, and an image-pickup device. Examples of the image-pickup device include a charge coupled device (CCD), and a complementary metal-oxide semiconductor (CMOS) image sensor. The photograph section 13 takes a picture of an object to acquire a photographed image, converts the image to photographed-image data, and sends the data to the control section 20.

The distance sensor 14 includes a sending section that sends out a kind of wave motion and a receiving section that receives the wave motion reflected by an object, and so can determine the distance to the object from the phase difference or time difference between the sent wave motion and the received wave motion. The distance sensor 14 sends the data on the sensed distance to the control section 20. Examples of the wave motion used by the distance sensor 14 include infrared light, radio waves, and ultrasound waves. Particularly, it is preferable that the distance sensor 14 include a combination of an infrared-light emitting diode (LED) and a photo diode (PD) in view of miniaturization and infrared communication.

The control section 20 controls the operations of the components of the mobile phone 10 in centralized manner. The control section 20 includes, for example, a personal computer (PC). The operation of the components is controlled by a computer that executes a control program. The program may be either of a form recorded in a removable medium such as a CD-ROM, or of a form installed in a hard disk. Alternatively, it may be of a form downloaded in a hard disk or the like via the communication section 24.

The memory section 21 includes a nonvolatile memory including the above-described hard disk. Content stored in the memory section 21 includes the above-mentioned control program, an operating-system (OS) program, and other various programs, and operation settings for the photograph section 13, data on photographed images, and input character data. The operation settings for the photograph section 13 include the values for white balance set at factory shipment or maintenance, and other various parameters for image processing in adjusting the light and shade of photographed images.

The sound output section 22 converts sound data from the control section 20 to sound waves, and outputs them to the exterior. Specifically, the sound output section 22 includes a digital to analog converter, a speaker, and an earphone. The sound input section 23 converts external sound waves to sound data, and sends the data to the control section 20. Specifically, the sound input section 23 includes a microphone, and an analog to digital converter.

The communication section 24 communicates with the base station of a mobile phone system by radio. Specifically, the communication section 24 converts communication data from the control section 20 to a format suitable for radio communication, and sends radio waves to the base station. The communication section 24 also converts radio waves received from the base station to communication data, and sends the data to the control section 20.

In this embodiment, the control section 20 includes a face authentication section (face authentication unit) 30 for authenticating personal identification. Fig. 4 shows the schematic configuration of the face authentication section 30. The face authentication section 30 includes a face-image acquisition section 31, a distance determination section (distance acquisition section) 32, 3D-or-2D determination section (object authentication section) 33, a face-image comparison section 34, and an authentication-result output section 36. The memory section 21 stores one or multiple pieces of facial-feature data 35 including registered facial-feature information.

The face-image acquisition section 31 instructs the photograph section 13 to capture a photographed image of an object, and acquires a face image for comparison from the captured photographed image. Known face authentication techniques such as detecting facial complexion regions, facial outlines, and facial features can be used to acquire the face image. The face-image acquisition section 31 notifies the distance determination section 32 of the fact that a face image has been acquired.

When the face-image acquisition section 31 acquires the face image, the distance determination section 32 instructs the distance sensor 14 to sense the distance to the face of the object. In this embodiment, the distance determination section 32 instructs the three distance sensors 14a to 14c to measure three distances to the object's face. The distance determination section 32 then gives the measurements to the 3D-or-2D determination section 33.

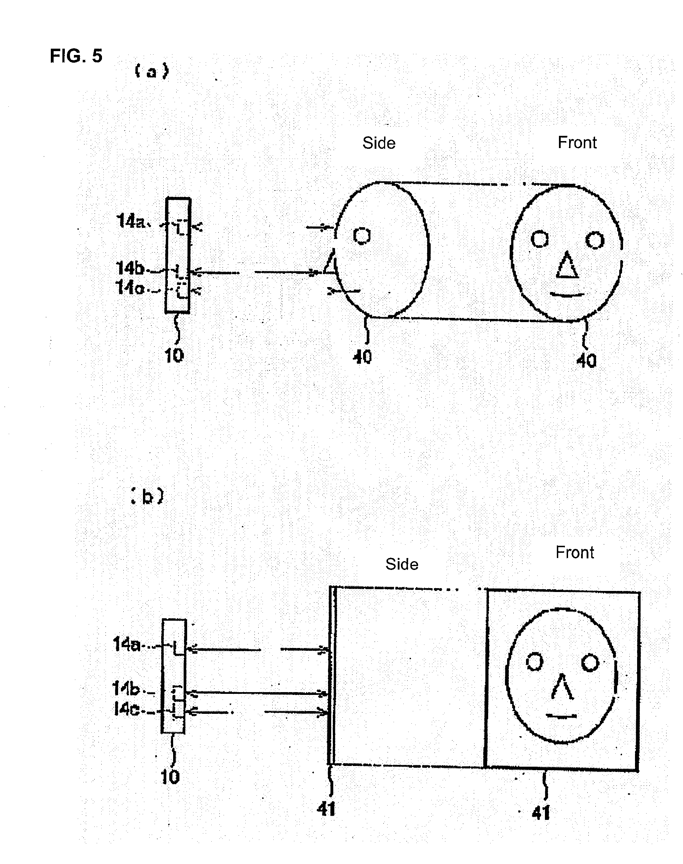

Fig. 5A shows the distances from the distance sensors 14a to 14c of the mobile phone 10 to solid object 40. Fig. 5B shows the distances from the distance sensors 14a to 14c to flat object 41. Fig. 5A shows that when the distance sensors 14a to 14c measure the distances to the 3D object 40, the distances to the three points are different. Particularly, it shows that the distance from the central distance sensor 14b to the 3D object 40 is shorter than those from the other distance sensors 14a and 14c to the 3D object 40.

On the other hand, Fig. 5B shows that when the distance sensors 14a to 14c measure the distances to the 2D object 41, the distances to the three points are substantially the same. Accordingly, it can be determined whether the object is solid or flat by determining whether the distances determined by the distance sensors 14a to 14c are substantially the same.

It is preferable that the points of distance measurement be distinctive parts of a face, such as eyes, a nose, a mouth, and a facial outline. This embodiment uses eyes, a nose, and a mouth as the points of measurement.

Referring back to Fig. 4, the 3D-or-2D determination section 33 determines whether the object is solid or flat from the measurements of the distance determination section 32. Specifically, in the case where the distances from the three distance sensors 14a to 14c to the object are substantially the same, the 3D-or-2D determination section 33 determines that the object is flat without unevenness. On the other hand, when the distances are different, the 3D-or-2D determination section 33 determines that the object is solid with unevenness. The 3D-or-2D determination section 33 then gives the determination result to the face-image comparison section 34 and the authentication-result output section 36.

When the 3D-or-2D determination section 33 determines that the object is solid, the face-image comparison section 34 extracts facial-feature information from the face image acquired by the face-image acquisition section 31 by a known face authentication technique, and compares the extracted feature information with the facial-feature data 35 stored in the memory section 21. The face-image comparison section 34 sends the comparison result to the authentication-result output section 36. Known examples of the face authentication technique include an eigenface method, a local-feature analysis (LFA) method, a graph matching method, a neural network method, a constraint mutual subspace method, a perturbation space method, and a frequency analysis method.

The authentication-result output section 36 instructs the display section 12 to display the authentication result on the basis of the determination result of the 3D-or-2D determination section 33 and the comparison result of the face-image comparison section 34. Specifically, when it is determined that the object is flat, or when it is determined that the feature information does not agree with the stored feature data, the authentication-result output section 36 instructs the display section 12 to display the authentication failure result. On the other hand, when the feature information agrees with the store feature data, the authentication-result output section 36 instructs the display section 12 to display the authentication-successful result.

Fig. 1 shows the operation of face authentication of the mobile phone 10 with the above configuration. The face-image acquisition section 31 first instructs the photograph section 13 to capture a photographed image of an object, and then acquires a face image (object face image) to be compared from the photographed image (step S10, hereinafter, simply referred to as S10, the same also applies to other steps).

The distance determination section 32 then instructs the three distance sensors 14a to 14c to measure the distances to three points of the object's face (S11). Then the 3D-or-2D determination section 33 determines whether there are significant differences among the three distances (S12). When there are no significant differences among the three distances, or when the three distances are substantially the same (No in S12), the 3D- or-2D determination section 33 determines that the object is flat, and then the display section 12 displays that authentication has failed by the instruction of the authentication-result output section 36 (S13).

On the other hand, when there are significant differences among the three distances (Yes in S12), the 3D-or-2D determination section 33 determines that the object is solid, and then the face-image comparison section 34 compares the face image acquired by the face-image acquisition section 31 with the stored facial-feature data (S14) . Then the display section 12 displays the authentication result by the instruction of the authentication-result output section 36 (S15) . After the process of step S13 or S15, the operation of the face authentication ends.

Accordingly, the distance sensors 14a to 14c and the distance determination section 32 measure the distances to multiple measurement points on the object's face before the face-image comparison section 34 checks face images and as such, spoofing-wath-picture can easily be detected.

### Second Embodiment

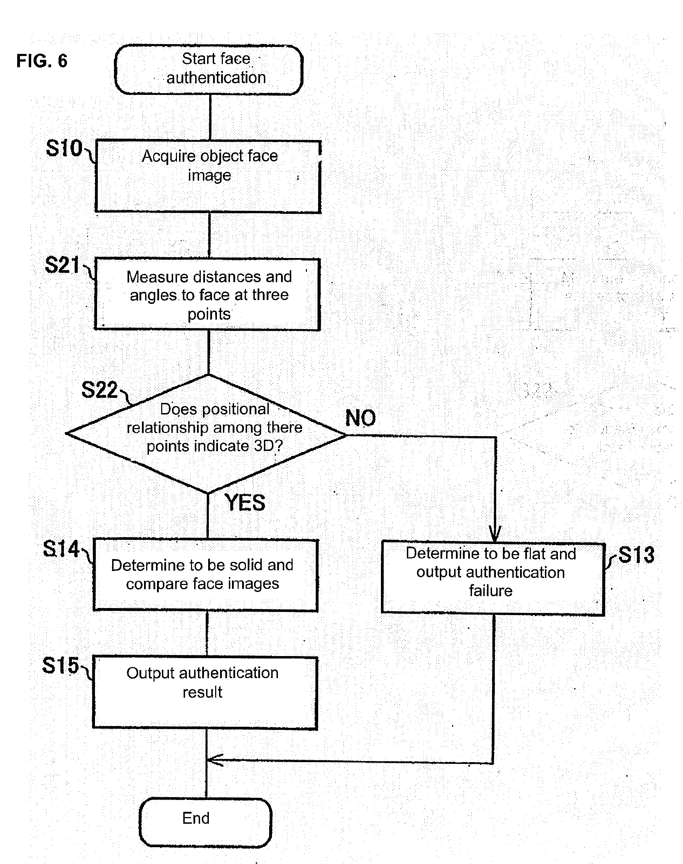

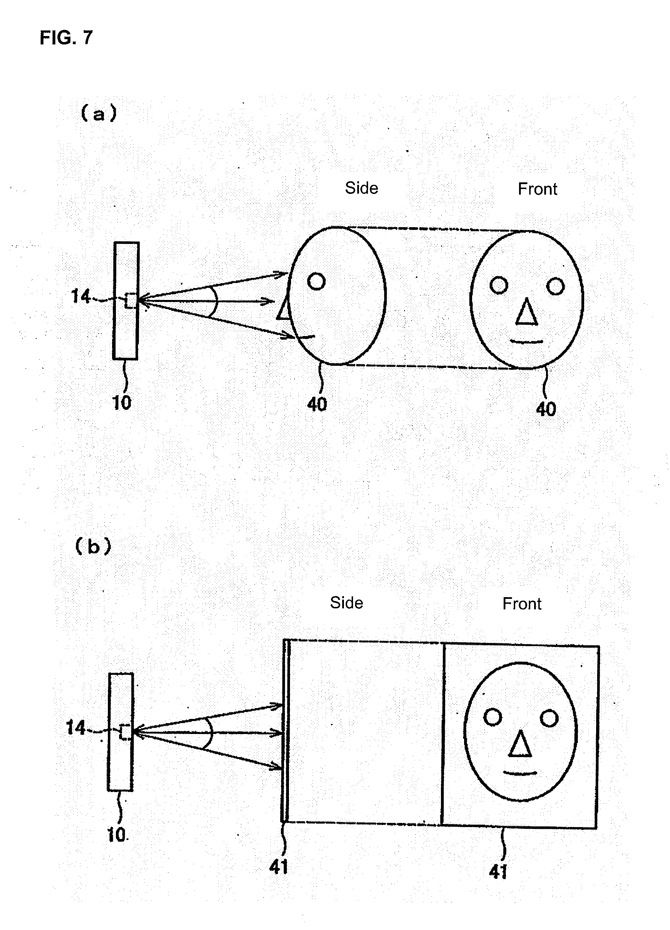

A second embodiment of the invention will be described hereinbelow with reference to Figs. 6 and 7. A mobile phone 10 of this embodiment is different from the mobile phone 10 shown in Figs. 1 to 5 in that it includes one scanning distance sensor 14, in place of the three distance sensors 14a to 14c, and in the method of distance measurement by the distance determination section 32 using the distance sensor 14 and in the method of determination whether an object is solid. The other components and operations are the same. The same components and operations as those of the first embodiment are given the same reference numerals and descriptions thereof will be omitted here.

Figs. 7A and 7B show a method of measuring the distances from the distance sensor 14 of the mobile phone 10 to an object's face. Fig. 7A shows a case in which the object is solid. Fig. 7B shows a case in which the object is flat. As illustrated, in this embodiment, the distance determination section 32 instructs the distance sensor 14 to measure the distance from the scanning distance sensor 14 to the object's face three times at different angles.

Figs. 7A and 7B show that the positional relationship among the three measurement points can be grasped from the distances and the angles. Fig. 7A shows that, for the 3D object 40, the three measurement points are not present on the same plane. On the other hand, Fig. 7B shows that, for the 2D object 41, the three measurement points are present on the same plane. Accordingly, when three measurement points are present on the same plane, it can be determined that the object is flat; when three measurement points are not present on the same plane, it can be determined that the object is solid. Thus, when three measurement points are present on the same plane, it can be determined to be spoofing-with-picture.

Fig. 6 shows the operation of face authentication of the mobile phone 10 with the above configuration. The face-image acquisition section 31 first instructs the photograph section 13 to acquire a photographed image of an object, and then acquires a face image to be compared from the photographed image (S10).

The distance determination section 32 then instructs the distance sensor 14 to measure the distances to three points of the object's face at different angles (S21). Then the 3D-or-2D determination section 33 finds the positional relationship among the three measurement points on the basis of the distances and angles determined (measured) by the distance determination section 32 to determine whether the positional relationship indicates that the object is solid (S22). When it is not solid (No in S22), the 3D-or-2D determination section 33 determines that the object is flat, and then the display section 12 displays that authentication has failed by the instruction of the authentication-result output section 36 (S13).

On the other hand, when the positional relationship indicates that the object is solid (Yes, in S22), the 3D-or-2D determination section 33 determines that the object is solid, and then the face-image comparison section 34 compares the face image acquired by the face-image acquisition section 31 with the stored facial-feature data (S14). Then the display section 12 displays the authentication result by the instruction of the authentication-result output section 36 (S15). After the process of step S13 or S15, the operation of the face authentication ends.

Accordingly, the distance sensor 14 and the distance determination section 32 measure the distances and angles to multiple measurement points on the face of an object before the face-image comparison section 34 compares face images and as such, spoofing-with-picture can easily be detected.

It is to be understood that the invention is not limited to the foregoing embodiments, but various modifications may be made within the spirit and scope of the claims. Also it is to be understood that a combination of the technical means disclosed in the different embodiments may be made within the scope of the invention.

For example, in the foregoing embodiments, the distances to multiple measurement points on an object's face are measured. However, facial pictures are generally smaller real faces. Accordingly, in order to make the dimension of a face image that is obtained by photographing a facial picture approximately equal to that of a face image of a real face, the facial picture need to be brought close to the photograph section 13. Accordingly, the distance to the face of an object to be authenticated is stored in the memory section 21 together with the facial-feature data 35; the distance determination section 32 measures the distance to the object's face; and if the measured distance is different from that stored in the memory section 21, then the 3D- or-2D determination section 33 can detect spoofing-with-picture, and so can determine that the object's face is false. Thus the authentication-result output section 36 can output authentication failure.

Also in this case, the distance sensor 14 and the distance determination section 32 measure the distance to an object's face before the face-image comparison section 34 compares face images and as such, spoofing-with-picture can easily be detected. Moreover, since it is enough to measure the distance only one time, spoofing-with-picture can be detected more easily than the foregoing embodiments.

The blocks of the face authentication section 30 of the mobile phone 10 may either be configured by hardware logic or software using a CPU as follows.

The face authentication section 30 includes a CPU that executes the instructions of control programs for various functions, and storage units (recording media) such as a ROM that stores the programs, a RAM that expands the programs, and memories that store the various programs and data. The object of the invention can also be achieved in such a way that a computer-readable recording medium that stores program codes (an execute-form program, an intermediate code program, and a source program) of the control program for the face authentication section 30, which is software for achieving the foregoing functions) is provided to the face authentication section 30, and its computer (or a CPU or MPU) reads the program codes recorded in the recording medium and executes them.

Examples of the recording medium include tape such as magnetic tape and cassette tape; disks including magnetic disks such as flexible disks and hard disks and optical disks such as CD-ROMs, MOs, MDs, DVDs, and CD-Rs; cards including IC cards (including memory cards) and optical cards; and semiconductor memories including mask ROMs, EPROMs, EEPROMs, and flash ROMs.

The face authentication section 30 may be connected to communication networks, through which the program codes may be provided. The communication networks are not particularly limited; for example, the Internet, intranets, extranets, LANs, ISDNs, VANs, CATV communication networks, virtual private networks, telephone line networks, mobile radio communication networks, and satellite communication networks are available. The transmission media for the communication networks are not particularly limited; for example, cable transmission including IEEE1394, USB, power-line carrier systems, cable TV lines, telephone lines, and ADSL lines; and radio transmission including infrared transmission such as IrDA and remote control, Bluetooth (registered trademark), 802.11 wireless transmission, HDR, mobile phone networks, satellite connections, and digital terrestrial networks are available. The invention can also be achieved by carrier waves or data signal strings in which the program codes are implemented through electronic transmission.

Thus, since the face authentication apparatus according to embodiments of the invention can easily detect spoofing-with-picture by measuring the distances to the face of an object to be authenticated, and determining whether the object's face is true or false from the measured distances, the face authentication apparatus can be applied not only to mobile phones but also to any electronic devices that need face authentication.

## Claims

1. A face authentication apparatus comprising:
a face-image comparison section that compares the face image of an object to be authenticated with a registered face image;
a distance acquisition section that measures the distance from a specified position to the object's face; and
an object authentication section that authenticates the object's face on the basis of the distance measured by the distance acquisition section.

2. The face authentication apparatus according to Claim 1, wherein
the distance acquisition section measures the distances from a plurality of positions to a plurality of measurement points on the object's face; and
the object authentication section determines whether the plurality of distances measured by the distance acquisition section are substantially the same, and when the distances are substantially the same, determines that the object's face is false.

3. The face authentication apparatus according to Claim 1, wherein
the distance acquisition section measures the distances and angles from a plurality of positions to a plurality of measurement points on the object's face; and
the object authentication section specifies the plurality of measurement points on the basis of the plurality of distances and angles measured by the distance acquisition section, determines whether the specified plurality of points are present on the same plane, and when the points are present on the same plane, determines that the object's face is false.

4. The face authentication apparatus according to Claim 1, wherein
the face image of the object to be authenticated and the distance from a specified position to the object's face are registered in advance; and
the object authentication section determines whether the distance measured by the distance acquisition section and the registered distance are substantially the same, and when the distances are not substantially the same, determines that the object's face is false.

5. An electronic device comprising:
the face authentication apparatus according to one of Claims 1 to 4;
a photograph section that takes a picture of an object to be authenticated, and forms a face image of the object; and
a distance measurement section that measures the distance from a specified position to the object's face.

6. A method of controlling a face authentication apparatus, the method comprising:
performing face authentication using a face-image comparison section that compares the face image of an object to be authenticated with a registered face image;
measuring the distance from a specified position to the object's face; and
authenticating the object's face on the basis of the measured distance.

7. A program for a computer to control the operation of the face authentication apparatus according to one of Claims 1 to 4.

8. A computer-readable recording medium in which the face-authentication-apparatus control program according to Claim 7 is recorded.
